# EUROPÄISCHE PATENTSCHRIFT

(11) **EP 1 278 415 B1**
(45) Veröffentlichungstag und Bekanntmachung des Hinweises auf die Patenterteilung: **01.10.2003**
(21) Anmeldenummer: 01947250.5
(22) Anmeldetag: 30.04.2001
(51) Int. Cl.: A01N 47/20, A01N 43/54, A01N 43/40, A01N 37/50, A01N 37/36

(54) **VERFAHREN ZUR INDUKTION DER VIRENRESISTENZ VON PFLANZEN**
METHOD FOR INDUCING VIRAL RESISTANCE IN PLANTS
PROCEDE POUR CONFERER A DES PLANTES UNE RESISTANCE VIS-A-VIS DE VIRUS

(30) Priorität: 03.05.2000 DE 10021190
(43) Veröffentlichungstag der Anmeldung: 29.01.2003
(73) Patentinhaber: BASF AKTIENGESELLSCHAFT, 67056 Ludwigshafen (DE)
(72) Erfinder: KÖHLE, Harald, 67273 Bobenheim (DE); CONRATH, Uwe, 66459 Kirkel 1 (DE); SEEHAUS, Kai, 76829 Landau (DE)
(86) Internationale Anmeldenummer: EP0104889
(87) Internationale Veröffentlichungsnummer: WO01082701

(56) Entgegenhaltungen:
- WO-A-98/29537

## Beschreibung

Die vorliegende Erfindung betrifft ein Verfahren zur Induktion der Virenresitenz von Pflanzen, welches dadurch gekennzeichnet ist, daß man die Pflanzen, den Boden oder Saatgüter mit einer wirksamen Menge einer Verbindung der FormelI 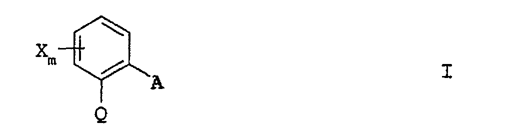 worin
- X: Halogen, C₁-C₄-Alkyl oder Trifluormethyl;
- m: 0 oder 1;
- Q: C (=CH-CH₃ )-COOCH₃, C(=CH-OCH₃)-COOCH₃, C(=N-OCH₃)-CONHCH₃ , C(=N-OCH₃)-COOCH₃ oder N(-OCH₃)-COOCH₃;
- A: -O-B, -CH₂O-B, -OCH₂-B, -CH=CH-B, -C≡-C-B, -CH₂O-N=C(R¹)-B oder -CH₂O-N=C(R¹)-C(R²)=N-OR³, wobei
B Phenyl, Naphthyl, 5-gliedriges oder 6-gliedriges Hetaryl oder 5-gliedriges oder 6-gliedriges Heterocyclyl, enthaltend ein bis drei N-Atome und/oder ein O- oder S-Atom oder ein oder zwei O- und/oder S-Atome, wobei die Ringsysteme unsubstituiert oder substituiert sind durch einen bis drei Reste R^{a}:
R^{a} Cyano, Nitro, Amino, Aminocarbonyl, Aminothiocarbonyl, Halogen, C₁-C₆-Alkyl, C₁-C₆-Halogenalkyi, C₁-C₆-Alkylcarbonyl, C₁-C₆-Alkylsulfonyl, C₁-C₆-Alkyl-sulfoxyl, C₃-C₆-Cycloalkyl, C₁-C₆-Alkoxy, C₁-C₆-Halogenalkoxy, C₁-C₆-Alkyloxycarbonyl, C₁-C₆-Alkylthio, C₁-C₆-Alkylamino, Di-C₁-C₆-Alkyl-amino, C₁-C₆-Alkylaminocarbonyl, Di-C₁-C₆-Alkylamino-carbonyl, C₁-C₆-Alkylaminothiocarbonyl, Di-C₁-C₆-Alkylaminothiocarbonyl, C₂-C₆-Alkenyl, C₂-C₆-Alkenyloxy, Phenyl, Phenoxy, Benzyl, Benzyloxy, 5- oder 6-gliedriges Heterocyclyl, 5- oder 6-gliedriges Hetaryl, 5-.oder 6-gliedriges Hetaryl-oxy, C(=NOR^{α})-OR^{β} oder OC (R^{α}) ₂-C (R^{β}=NOR^{β} wobei die cyclischen Reste ihrerseits unsubstituiert oder substituiert sind durch einen bis drei Reste R^{b}:
R^{b} Cyano, Nitro, Halogen, Amino, Aminocarbonyl, Aminothiocarbonyl, C₁-C₆-Alkyl, C₁-C₆-Halogen-alkyl, C₁-C₆-Alkylsulfonyl, C₁-C₆-Alkylsulfoxyl, C₃-C₆-Cycloalkyl, C₁-C₆-Alkoxy, C₁-C₆-Halogen-alkoxy, C₁-C₆-Alkoxycarbonyl, C₁-C₅-Alkylthio, C₁-C₆-Alkylamino, Di-C₁-C₆-alkylamino, C₁-C₆-Al-kylaminocarbonyl, Di-C₁-C₆-alkylaminocarbonyl, C₁-C₆-Alkylaminothiocarbonyl, Di-C₁-C₆-alkyl-aminothiocarbonyl, C₂-C₆-Alkenyl, C₂-C₆-Alkenyl-oxy, C₃ -C₆-Cycloalkyl, C₃-C₆-Cycloalkenyl, Phenyl, Phenoxy, Phenylthio, Benzyl, Benzyloxy, 5-oder 6-gliedriges Heterocyclyl, 5- oder 6-gliedriges Hetaryl, 5- oder 6-gliedriges Hetaryloxy oder C(=NOR^{α})-OR^{β};
R^{α}, R^{β} Wasserstoff oder C₁-C₆-Alkyl;
- R¹: Wasserstoff, Cyano, C₁-C₄-Alkyl, C₁-C₄-Halogenalkyl, C₃-C₆-Cycloalkyl, C₁-C₄-Alkoxy;
- R²: Phenyl, Phenylcarbonyl, Phenylsulfonyl, 5- oder 6-gliedriges Hetaryl, 5- oder 6-gliedriges Hetarylcarbonyl oder 5- oder 6-gliedriges Hetarylsulfonyl, wobei die Ringsysteme unsubstituiert oder substituiert sind durch ein bis drei Reste R^{a},
C₁-C₁₀-Alkyl, C₃-C₆-Cycloalkyl, C₂-C₁₀-Alkenyl, C₂-C₁₀-Alkinyl, C₁-C₁₀-Alkylcarbonyl, C₂-C₁₀-Alkenylcarbonyl, C₃-C₁₀-Alkinylcarbonyl, C₁-C₁₀-Alkylsulfonyl, oder C (=NOR^{α})-OR^{β}, wobei die Kohlenwasserstoffreste dieser Gruppen unsubstituiert oder substituiert sind durch einen bis drei Reste R^{c}:
R^{c} Cyano, Nitro, Amino, Aminocarbonyl, Aminothio-carbonyl, Halogen, C₁-C₆-Alkyl, C₁-C₆-Halogenalkyl, C₁-C₆-Alkylsulfonyl, C₁-C₆-Alkylsulfoxyl, C₁-C₆-Alkoxy, C₁-C₆-Halogenalkoxy, C₁-C₆-Alkoxy-carbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothio-carbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkyloxy, 5- oder 6-gliedriges Heterocyclyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste R^{a} tragen können; und
- R³: Wasserstoff, C₁-C₆-Alkyl, C₂-C₆-Alkenyl, C₂-C₆-Alkinyl, wobei die Kohlenwasserstoffreste dieser Gruppen unsubstituiert oder substituiert sind durch einen bis drei Reste R^{C};
bedeuten,
behandelt, die von den Pflanzen oder Saatgütern aufgenommen wird. Daneben berifft die Erfindung generell die Verwendung der Verbindungen der Formel I zur Induktion der Virenresitenz von Pflanzen.

Zahlreiche Vertreter der sehr heterogenen Gruppe der Pflanzenviren (Phytophagen) können wirtschaftlich relevante Pflanzen befallen; die Schadsymptome reichen dabei von morphologischen Veränderungen bis zum Absterben der Pflanzen. Wegen der Vielzahl der Übertragungswege (z.B. mechanisch über Verwundung, durch Samen und Pollen oder über Vektoren wie Nematoden und Insekten), Problemen der Diagnose und dem Mangel an geeigneten Wirkstoffen ist eine Bekämpfung solcher Virosen außerordentlich schwierig;, im Vordergrund stehen daher präventive und phytosanitäre Maßnahmen. Demzufolge ist die Verhinderung von Viruserkrankungen bei Pflanzen ein wichtiges Anliegen in der Landwirtschaft.

Bei der Suche nach Verfahren zur Verhinderung von Viruserkrankungen bei Pflanzen sind bereits antivirale Wirkstoffe gefunden worden, die z. T. Nucleinsäuren ähnlich sind. Einige dieser Substanzen erzeugen jedoch Mutanten und inhibieren den Metabolismus von Nucleinsäuren und Proteinen in den Wirtszellen und geben Anlaß zu Schäden. Diese Materialien ergeben nur einen kleinen tatsächlichen Kontrolleffekt im Feld.

Ein elegantes Prinzip stellt die Nutzung bzw. Stimulation der pflanzeneigenen Abwehrkräfte dar:

In DE-A 39 34 761 wird zur Verhinderung von Viruserkrankungen von Pflanzen Polylysin und Alkyldiethylentriaminoessigsäuren vorgeschlagen. In EP-A 420 803 ist die immunisierende Wirkung von Benzo-1,2;3-thiazolderivaten gegen verschiedene phytopathogene Mikoorganismen beschrieben. Aus WO-A 96/37493 ist eine ähnliche Wirkung von Pyridylthiazolen bekannt.

In DD 280 030 werden Sulfonsäurederivate als Mittel zur Resistenzaktivierung von Kultur- und Nutzpflanzen vorgeschlagen. Aber die Wirkung dieser Substanzen ist in vielen Fällen unzureichend.

Der vorliegenden Erfindung lag daher die Aufgabe zugrunde, ein Verfahren bereitzustellen, das breit anwendbar ist, die Pflanzen nicht schädigt und eine wirkungsvolle Immunisierung gegen Viruserkrankungen der Pflanzen bewirkt.

Demgemäß wurde das eingangs definierte Verfahren gefunden. Die verwendeten Wirkstoffe sind als Fungizide und zum Teil auch als Insektizide bekannt (EP-A 178 826; EP-A 253 213; WO-A 93/15046; WO-A 95/18789; WO-A 95/21153; WO-A 95/21154; WO-A 95/24396; WO-A 96/01256; WO-A 97/15552). Einen Hinweis auf eine mögliche stimulierende Wirkung dieser Wirkstoffe auf das pflanzeneigene Immunsystem gegen Viren gab es jedoch bisher nicht.

Die gute Pflanzenverträglichkeit der Wirkstoffe der Formel I in den zur Bekämpfung von Pflanzenkrankheiten notwendigen Konzentrationen erlaubt eine Behandlung von oberirdischen Pf lanzenteilen, wie auch eine Behandlung von Pflanz- und Saatgut und des Bodens.

In dem erfindungsgemäßen Verfahren wird der Wirkstoff entweder durch die Blattoberfläche oder durch die Wurzeln von der Pflanze aufgenommen und im Pflanzensaft in der ganzen Pflanze verteilt.

Daher tritt die Schutzwirkung nach Anwendung des erfindungsgemäßen Verfahrens nicht nur bei den Pflanzenteilen auf, die direkt besprüht wurden, sondern die Resistenz der ganzen Pflanze gegen Viruserkrankungen ist erhöht.

Bei einer bevorzugten Ausführungsform des Verfahrens werden die oberirdischen Pflanzenteile mit einer Formulierung des Wirkstoffs I behandelt.

In den eingangs zitierten Schriften sind Synthesewege zur Herstellung der in dem erfindungsgemäßen Verfahren verwendeten Wirkstoffe beschrieben.

Für das erfindungsgemäße Verfahren werden Wirkstoffe mit den folgenden Bedeutungen der Substituenten, und zwar jeweils für sich allein oder in Kombination, besonders bevorzugt.

Für das erfindungsgemäße Verfahren werden insbesondere die Wirkstoffe der Formeln II bis VIII besonders bevorzugt, in denen
V OCH₃ und NHCH₃,
Y CH und N und
T und Z unabhängig voneinander CH und N bedeuten.

Bevorzugte Wirkstoffe der Formel I, in denen Q für N(-OCH₃)-COOCH₃ steht, sind die in den Schriften WO-A 93/15046 und WO-A 96/01256 beschriebenen Verbindungen.

Bevorzugte Wirkstoffe der Formel I, in denen Q für C(=CH-OCH₃)-COOCH₃ steht, sind die in den Schriften EP-A 178 826 und EP-A 278 595 beschriebenen Verbindungen.

Bevorzugte Wirkstoffe der Formel I, in denen Q für C(=N-OCH₃)-COOCH₃ steht, sind die in den Schriften EP-A 253 213 und EP-A 254 426 beschriebenen Verbindungen.

Bevorzugte Wirkstoffe der Formel I, in denen Q für C(=N-OCH₃)-CONHCH₃ steht, sind die in den Schriften EP-A 398 692, EP-A 477 631 und EP-A 628 540 beschriebenen Verbindungen.

Bevorzugte Wirkstoffe der Formel I, in denen Q für C(=CH-CH₃)-COOCH₃ steht, sind die in den Schriften EP-A 280 185 und EP-A 350 691 beschriebenen Verbindungen.

Bevorzugte Wirkstoffe der Formel I, in denen A für -CH₂O-N=C(R¹)-B steht, sind die in den Schriften EP-A 460 575 und EP-A 463 488 beschriebenen Verbindungen.

Bevorzugte Wirkstoffe der Formel I, in denen A für ―O―B steht, sind die in den Schriften EP-A 382 375 und EP-A 398 692 beschriebenen Verbindungen.

Bevorzugte Wirkstoffe der Formel I, in denen A für -CH₂O-N=C(R¹)-C(R²)=N-OR³ steht, sind die in den Schriften WO-A 95/18789, WO-A 95/21153, WO-A 95/21154, WO-A 97/05103 und WO-A 97/06133 beschriebenen Verbindungen.

Insbesondere werden Wirkstoffe der Formel I bevorzugt, in denen
Q für N(-OCH₃)-COOCH₃,
A für CH₂-O- und
B für 3-Pyrazolyl oder 1,2,4-Triazolyl steht, wobei B einen oder zwei Substituenten trägt ausgewählt aus der Gruppe
   - Halogen, Methyl und Trifluormethyl und
   - Phenyl und Pyridyl, insbesondere 2-Pyridyl, substituiert durch 1 bis 3 Reste R^{b}.

Diese Wirkstoffe werden durch die Formel II beschrieben.

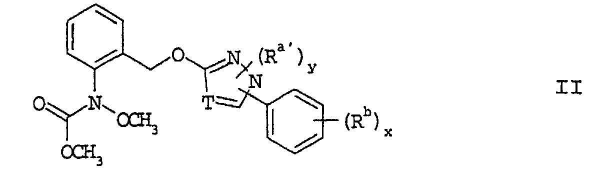

Insbesondere werden auch Wirkstoffe der Formel II' bevorzugt.

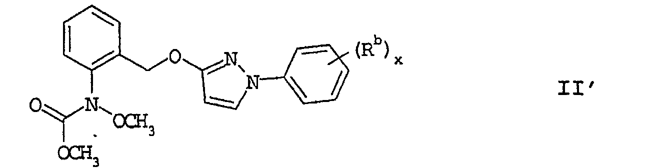

Im Hinblick auf ihre Verwendung die in den folgenden Tabellen zusammengestellten Verbindungen besonders bevorzugt.

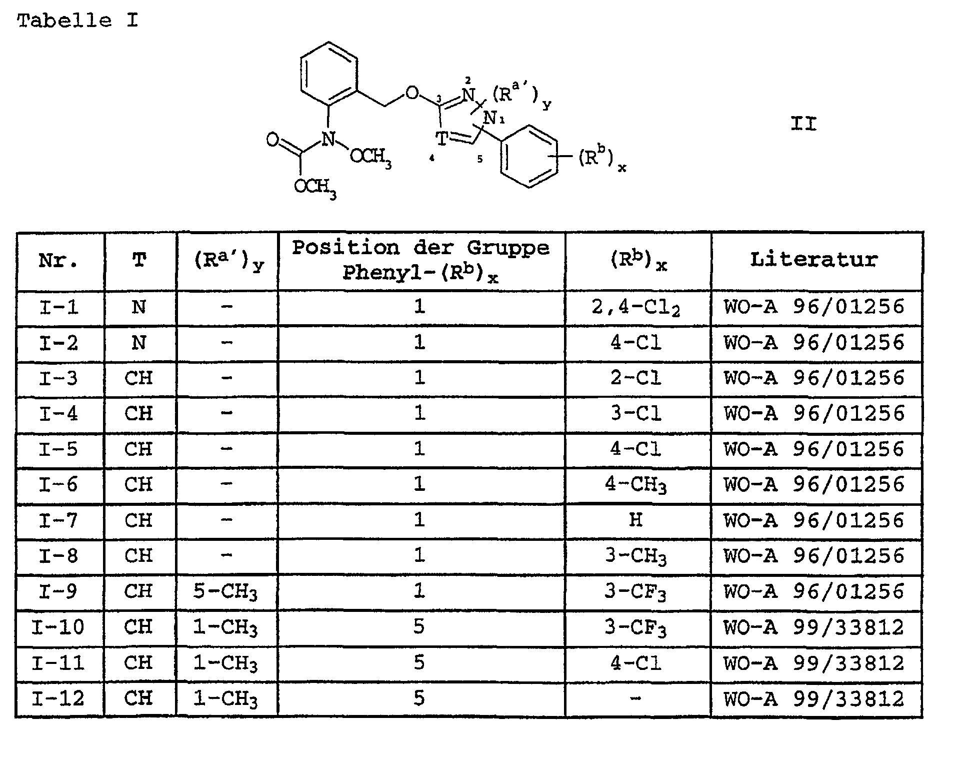

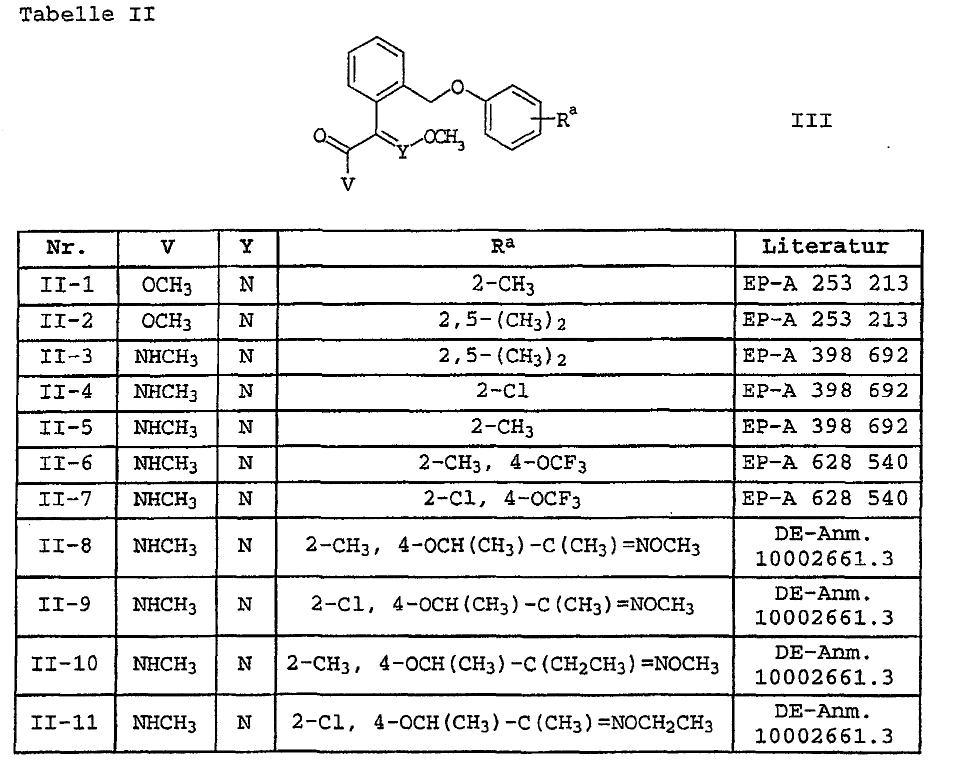

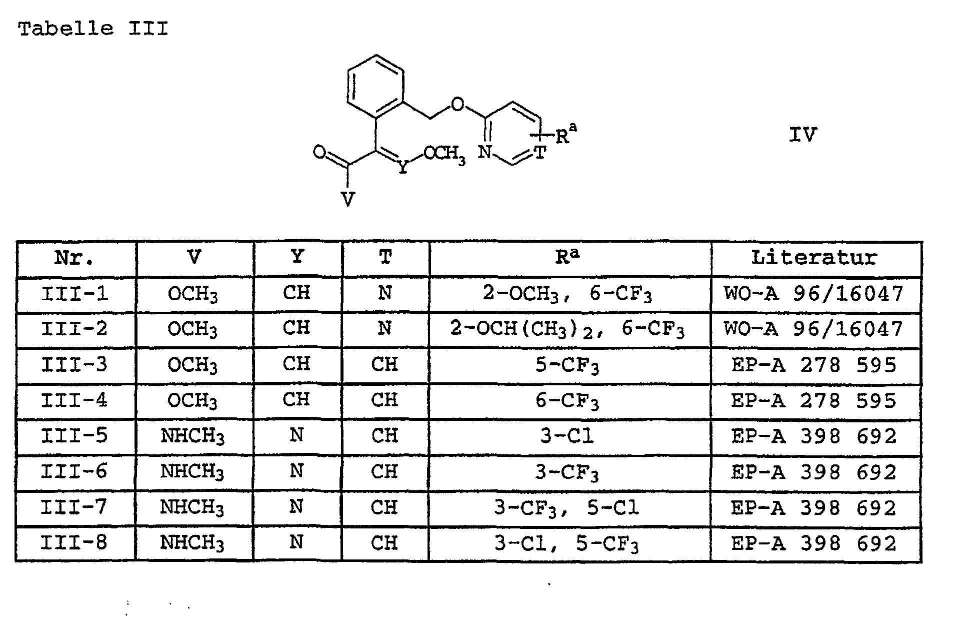

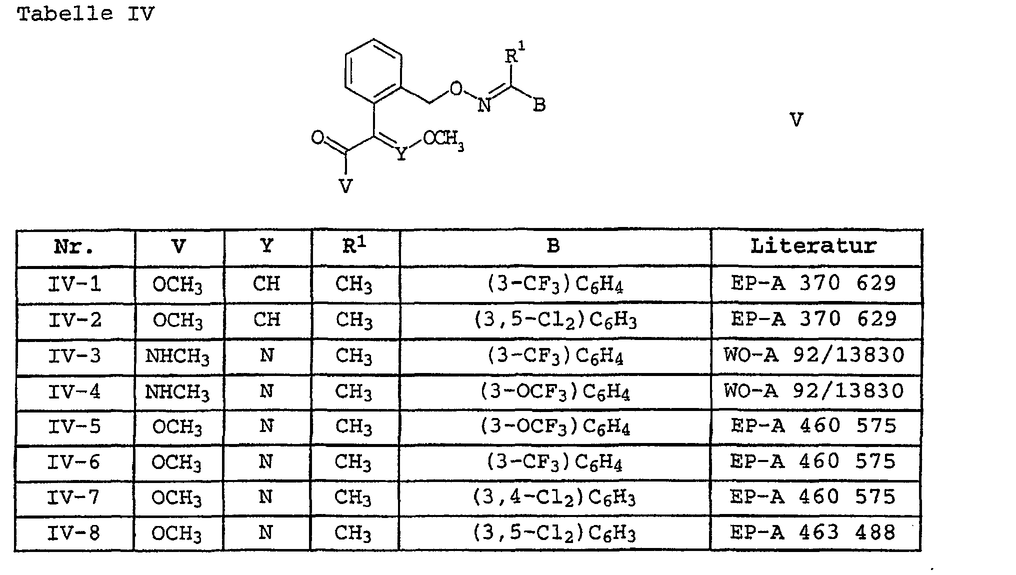

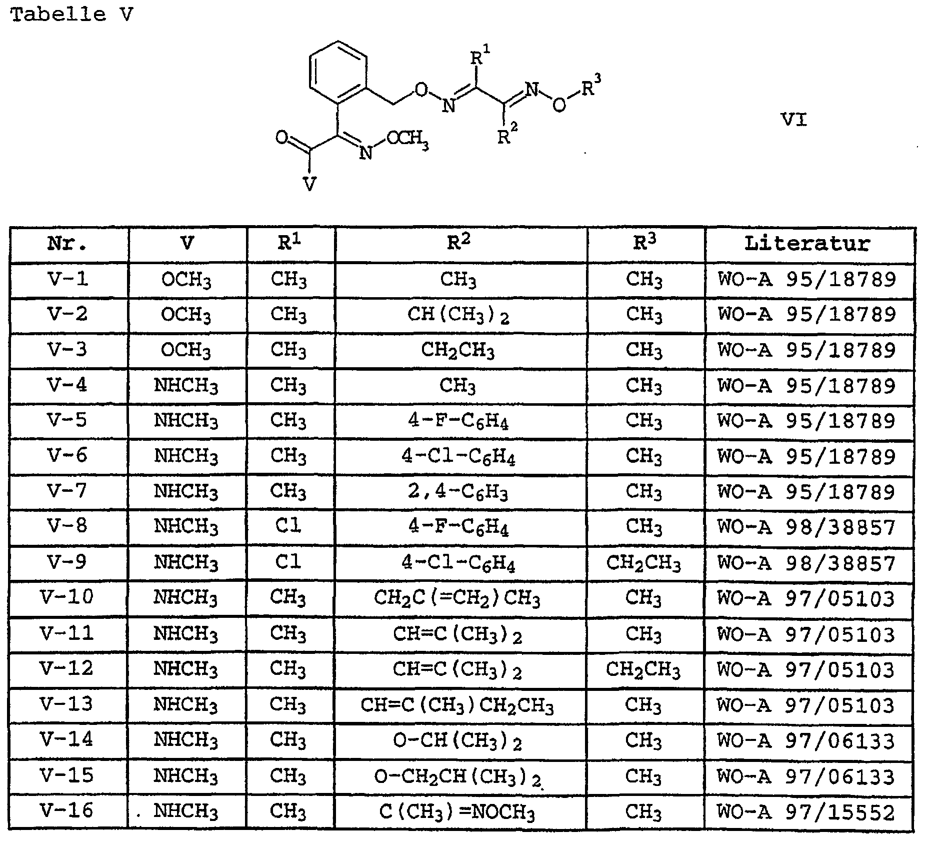

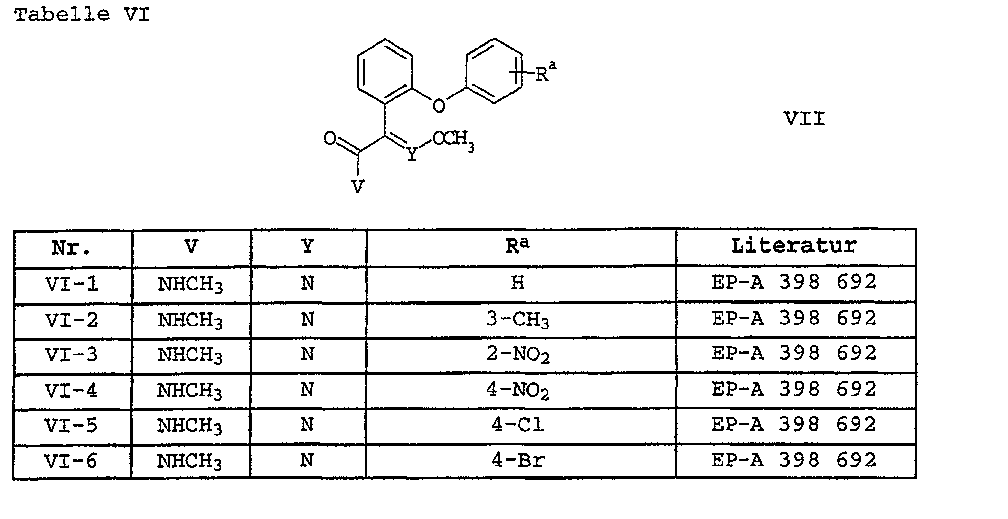

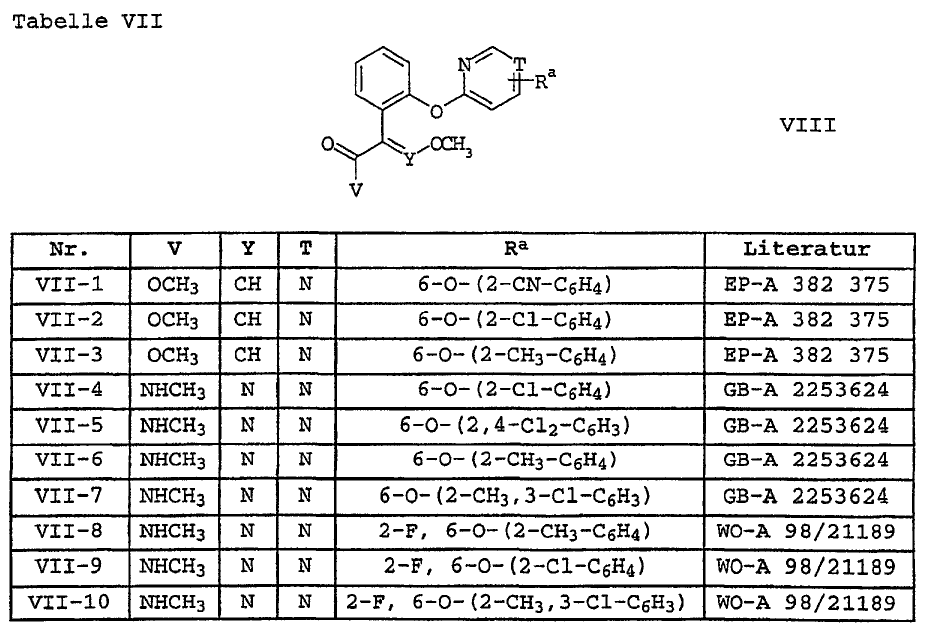

Besonders bevorzugt sind insbesondere die Wirkstoffe I-5 (common name: Pyraclostrobin), III-4 (common name: Picoxystrobin), IV-3 (comrion, name: Trifloxystrobin) und VII-1 (common name: Azoxystrobin).

Die Verbindungen I erhöhen die Resistenz von Pflanzen gegen Viren. Besondere Bedeutung haben sie für die Bekämpfung von Viren an verschiedenen Kulturpflanzen wie Tabak, Gerste, Gurke, Kartoffel und Rübe, sowie an den Samen dieser Pflanzen.

Speziell eignen sie sich zur Bekämpfung folgender Pflanzenkrankheiten:
- beim Tabak gegen das Tabakmosaik- und Tabaknekrose-Virus,
- bei der Bohne gegen das gewöhnliche Bohnenmosaik- und das Bohnengelbmosaik-Virus,
- bei der Gerste gegen das Gerstenstreifenmosaik- und das Gerstengelbverzwergungs-Virus,
- bei der Gurke gegen das Gurkengrünscheckungsmosaik- und das Gurkenmosaik-Virus,
- bei der Kartoffel gegen das Kartoffel-X- und das Kartoffel-γ-Virus,
- bei der Rübe gegen die Virösa Wurzelbärtigkeit und das Milde Rübenvergilbungsvirus.

Die Verbindungen I werden angewendet, indem man die vor Virenbefall zu schützenden Pflanzen, Saatgüter oder den Erdboden mit einer wirksamen Menge der Wirkstoffe behandelt. Die Anwendung kann sowohl vor als auch nach der Infektion der Pflanzen oder Samen durch die Viren erfolgen.

In einer bevorzugten Ausführungsform des Verfahrens erfolgt die Behandlung der Pflanze vor der Infektion. Es ist eine deutlich reduzierte Anfälligkeit der Pflanze gegen Virenerkrankungen zu verzeichnen.

Die Aufwandmengen liegen bei der Anwendung im Pflanzenschutz je nach Art des Erregers und der Pflanze zwischen 0,01 und 2,0 kg Wirkstoff pro ha.

Bei der Saatgutbehandlung werden im allgemeinen Wirkstoffmengen von 0,001 bis 0,1 g, vorzugsweise 0,01 bis 0,05 g je Kilogramm Saatgut benötigt.

Die Verbindungen I können in die für Fungizide üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen im wesentlichen die auch bei Fungiziden Üblichen in Betracht. Die Formulierungen enthalten im allgemeinen zwischen 0,01 und 95 Gew.-%, vorzugsweise zwischen 0,1 und 90 Gew.-% des Wirkstoffs. Die Wirkstoffe werden dabei in einer Reinheit von 90% bis 100%, vorzugsweise 95% bis 100% (nach NMR-Spektrum) eingesetzt.

### Beispiele für Formulierungen sind:

I. 5 Gew.-Teile einer erfindungsgemäßen Verbindung werden mit 95 Gew.-Teilen feinteiligem Kaolin innig vermischt. Man erhält auf diese Weise ein Stäubemittel, das 5 Gew.-% des Wirkstoffs enthält.
II. 30 Gew.-Teile einer erfindungsgemäßen Verbindung werden mit einer Mischung aus 92 Gew.-Teilen pulverförmigem Kieselsäuregel und8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit (Wirkstoffgehalt 23 Gew.-%).
III. 10 Gew.-Teile einer erfindungsgemäßen Verbindung werden in einer Mischung gelöst, die aus 90 Gew.-Teilen Xylol, 6 Gew.-Teilen des Anlagerungsproduktes von 8 bis 10 Mol Ethylenoxid an 1 Mol Ölsäure-N-monoethanolamid, 2 Gew.-Teilen Calciumsalz der Dodecylbenzolsulfonsäure und 2 Gew.-Teilen des Anlagerungsproduktes von 40 Mol Ethylenoxid an 1 Mol Ricinusöl besteht (Wirkstoffgehalt 9 Gew.-%).
IV. 20 Gew.-Teile einer erfindungsgemäßen Verbindung werden in einer Mischung gelöst, die aus 60 Gew.-Teilen Cyclohexanon, 30 Gew.-Teilen Isobutanol, 5 Gew.-Teilen des Anlagerungsproduktes von 7 Mol Ethylenoxid an 1 Mol Isooctylphenol und 5Gew.-Teilen des Anlagerungsproduktes von 40 Mol Ethylenoxid an 1 Mol Ricinusöl besteht (Wirkstoffgehalt 16 Gew.-%).
V. 80 Gew.-Teile einer erfindungsgemäßen Verbindung werden mit 3 Gew.-Teilen des Natriumsalzes der Diisobutylnaphthalin-alpha-sulfonsäure, 10 Gew.-Teilen des Natriumsalzes einer Ligninsulfonsäure aus einer Sulfit-Ablauge und 7 Gew.-Teilen pulverförmigem Kieselsäuregel gut vermischt und in einer Hammermühle vermahlen (Wirkstoffgehalt 80 Gew.-%).
VI. Man vermischt 90 Gew.-Teile einer erfindungsgemäßen Verbindung mit 10 Gew.-Teilen N-Methyl-α-pyrrolidon und erhält eine Lösung, die zur Anwendung in Form kleinster Tropfen geeignet ist (Wirkstoffgehalt 90 Gew.-%).
VII. 20 Gew.-Teile einer erfindungsgemäßen Verbindung werden in einer Mischung gelöst, die aus 40 Gew.-Teilen Cyclohexanon, 30Gew.-Teilen Isobutanol, 20 Gew.-Teilen des Anlagerungsproduktes von 7 Mol Ethylenoxid an 1 Mol Isooctylphenol und 10 Gew.-Teilen des Anlagerungsproduktes von 40 Mol Ethylenoxid an 1 Mol Ricinusöl besteht. Durch Eingießen und feines Verteilen der Lösung in 100 000 Gew.-Teilen Wasser erhält man eine wäßrige Dispersion, die 0,02 Gew.-% des Wirkstoffs enthält.
VIII. 20 Gew.-Teile einer erfindungsgemäßen Verbindung werden mit 3 Gew.-Teilen des Natriumsalzes der Diisobutylnaphthalin-α-sulfonsäure, 17 Gew.-Teilen des Natriumsalzes einer Ligninsulfonsäure aus einer Sulfit-Ablauge und 60 Gew.-Teilen pulverförmigem Kieselsäuregel gut vermischt und in einer Hammermühle vermahlen. Durch feines Verteilen der Mischung in 20000 Gew.-Teilen Wasser erhält man eine Spritzbrühe, die 0,1 Gew.-% des Wirkstoffs enthält.

Wäßrige Anwendungsformen können üblicherweise aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Ö1 oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Ö1 bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Herbizide, andere Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Der Hinweis auf die Resistenzinduktionswirkung der Wirkstoffe I gegen Viren kann als Verpackungsaufdruck oder in Produktdatenblättern erfolgen. Der Hinweis kann auch bei Präparaten erfolgen, die mit den Wirkstoffen I in Kombination angewendet werden können.

Die Resistenzinduktion kann auch eine Indikation sein, die Gegenstand einer behördlichen Zulassung der Wirkstoffe I sein kann.

Die Wirkung der Verbindungen der allgemeinen Formel I ließ sich durch die folgenden Versuche zeigen:

### Anwendungsbeispiele für die Resistenzinduktion gegen Viren

### Pflanzenmaterial

Für die Versuche wurden Tabakpflanzen (Nicotinia tabacum cv. Xanthi-nc) bei 25°C, 59% Luftfeuchte und einer täglichen Lichtperiode von 16 Stunden (150-200 µM Quanten/s⁻¹/m⁻²) für 4 bis 5 Wochen in Pikiererde (Einheitserde Typ ED 73) angezogen. Ein Teil der Pflanzen wurde einmal wöchentlich gedüngt, indem dem Gießwasser ein kommerzieller Blumendünger (10% Gesamtstickstoff, 9% Phosphat, 7% Kalium) in der empfohlenen Dosierung zugesetzt wurde.

### Wirkstoffapplikation

Bei den verwendeten formulierten Wirkstoffen handelte es sich um in Wasser dispergierbare Granulate mit einem Wirkstoffanteil von 20%. Die in den Versuchen verwendeten Konzentrationen (0,01-10 mM) beziehen sich auf den Wirkstoffgehalt.

Um eine Verteilung des Wirkstoffs in der gesamten Pflanze zu verhindern, wurden die Stengel von Pflanzen, bei denen ein Blatt infiltriert worden war, über dem behandelten Blatt mit einem sterilen Skalpell abgetrennt.

Die Pflanzen wurden nach Wirkstoffapplikation und auch nach späterer Virusinfektion in der Anzuchtkammer belassen.

Virusinfektion und Resistenzbestimmung (nach Malamy et al., SCIENCE, Bd. 250, S. 1002-1004 (1990)):

Die verschieden vorbehandelten Tabakpflanzen wurden mit dem Tabak-Mosaikvirus (TMV, Stamm U1) infiziert. Dazu wurde eine Virus-Stammlösung mit 50mM Phosphatpuffer (pH 7) auf eine Endkonzentration von 1 µg / ml TMV-Hüllprotein verdünnt. Die Infektion erfolgte durch sanftes Reiben einer mit der TMV-Lösung getränkten Mullbinde auf Blättern, deren Oberflächen vorher mit Siliziumcarbid bestreut worden waren. Das Siliziumcarbid wurde nach erfolgter Infektion unter einem sanften Wasserstrahl von den Blättern abgespült, und die Pflanzen unter den oben beschriebenen Bedingungen belassen. Die Infektion mit TMV erfolgte 1 Tag nach Vorbehandlung. Fünf bis 7 Tage nach erfolgter Infektion wurde der Durchmesser von 10 bis 20 Läsionen auf den Blättern bestimmt.

Der Läsionsdurchmesser ist ein Maß für die erworbene Resistenz der Pflanzen, wobei die kleinsten Läsionen die höchste erworbene Resistenz repräsentieren.

### Anwendungsbeispiel 1

Einzelne Blätter der Pflanzen wurden an einigen Stellen mit einer Injektionskanüle durchstochen und die wässrige Wirkstoff-Lösung an den Einstich-Stellen mit einer Spritze ins Blatt eingespritzt (Applikationsmenge 2 bis 5 ml /Blatt). Die unlöslichen Bestandteile der Wirkstoff-Lösung waren zuvor entweder durch Sedimentation oder durch kurzes Zentrifugieren (3 Minuten bei 5000 g) abgetrennt worden. Bei den Kontrollpflanzen wurde das Wasser in die Blätter eingespritzt.

Nach 7 Tagen wurde der Durchmesser der durch TMV verursachten Läsionen auf den Blättern in Millimetern [mm] bestimmt.

In diesem Test zeigten die mit 1 mM des Wirkstoffs I-5 der Tabelle I behandelten Pflanzen Läsionen von durchschnittlich 2,35 mm und die mit 2,5 mM behandelten Pflanzen 1,8 mm, während die mit reinem Wasser als Kontrolle behandelten Pflanzen Läsionen von 3,55 mm aufwiesen.

### Anwendungsbeispiel 2

Von dem behandelten Blatt wurde eine Hälfte mit der Wirkstofflösung (Herstellung gemäß Beispiel 1), die andere Hälfte mit Wasser infiltriert. Diese Vorgehensweise sollte Variationen bei der Antwort zwischen verschiedenen Blättern ausschließen und eine direkte Bestimmung des Wirkstoffeffektes ermöglichen.

Nach 5 Tagen wurde der Durchmesser der durch TMV verursachten Läsionen auf den Blättern in Millimetern [mm] bestimmt.

In diesem Test zeigten die mit 0,5, bzw. 1 mM des Wirkstoffs I-5 der Tabelle I behandelten Blattbereiche Läsionen von durchschnittlich 2,75, bzw. 2,85 mm und die unbehandelten Blattbereiche 4,15, bzw. 4,25 mm, während die mit reinem Wasser als Kontrolle behandelten Pflanzen Läsionen von 3,2, bzw. 3,35 mm aufwiesen.

### Anwendungsbeispiel 3

Blatthälften von ca. 5 Wochen alten Tabakpflanzen (Kulturvarietät Xanthi-nc) wurden mit 1 mM Wirkstofflösung in 1% wässr. Ethanol infiltriert; die Blatthälften der Kontrollen wurden mit 1% wässr. Ethanol infiltriert.

Die Infektion mit TMV erfolgte 1 Tag nach Behandlung; die Auswertung erfolgte nach weiteren 5 Tagen. Dargestellt sind die Mittelwerte der durch den Virusbefall abgestorbenen Blattflächen (Läsionen) am Infektionsort auf Wirkstoff behandelten bzw. unbehandelten Blatthälften (Kontrollen):

Fläche der Läsionen im Vergleich zur Kontrolle:

| **Wirkstoff** | **Flächen-Prozent** |
|---|---|
| I-5 | 53,0 % |
| II-3 | 68,1 % |
| III-4 | 60,3 % |
| IV-3 | 76,1 % |
| V-16 | 63,8 % |
| VII-1 | 62,1 % |

### Anwendungsbeispiel 4

Durchführung wie in Anwendungsbeispiel 3, jedoch erfolgte die Infektion 2 Tage nach Behandlung; die Auswertung erfolgte nach weiteren 5 Tagen.

Fläche der Läsionen im Vergleich zur Kontrolle:

| **Wirkstoff** | **Flächen-Prozent** |
|---|---|
| II-3 | 62,7 % |
| III-4 | 78,4 % |
| VII-1 | 70,4 % |

### Anwendungsbeispiel 5

### Besprühen der Blätter mit Wirkstofflösungen

Jeweils 2 mM Wirkstoff wurden unter Mithilfe eines universellen Benetzungsmittles im Verhältnis 1:1 (w/w) in Wasser gelöst und auf Blatthälften von 5 Wochen alten Tabakpflanzen (Kulturvarietät Xanthi-nc) gesprüht (Blatthälften der Kontrollen lediglich mit gelöstem Benetzungsmittel) .

Die Infektion mit TMV erfolgte 5 Tage nach Behandlung, die Auswertung erfolgte nach weiteren 4 Tagen. Dargestellt sind die Mittelwerte der durch den Virusbefall abgestorbenen Blattflächen (Läsionen) am Infektionsort auf Wirkstoff behandelten bzw. unbehandelten Blatthälften (Kontrollen).

Fläche der Läsionen im Vergleich zur Kontrolle:

| **Wirkstoff** | **Flächen-Prozent** |
|---|---|
| II-3 | 49,6 % |
| III-4 | 73,6 % |
| VII-1 | 68,3 % |

## Patentansprüche

1. Verfahren zur Induktion der Virenresistenz von Pflanzen, **dadurch gekennzeichnet, daß** man die Pflanzen, den Boden oder Saatgüter mit einer wirksamen Menge einer Verbindung der Formel I, 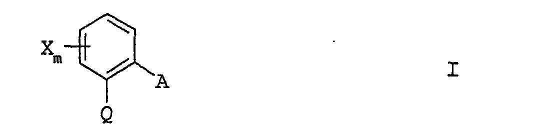 worin
X Halogen, C₁-C₄-Alkyl oder Trif luormethyl;
m 0 oder 1;
Q C (=CH-CH₃) -COOCH₃, C(=CH-OCH₃) -COOCH₃, C(=N-OCH₃)-CONHCH₃, C(=N-OCH₃)-COOCH₃ oder H(-OCH₃)-COOCH₃;
A -O-B, -CH₂O-B, -OCH₂-B, -CH=CH-B, -C≡C-B, -CH₂O-N=C (R¹)―B oder -CH₂O-N=C(R¹)-C(R²)=N-OR³, wobei
B Phenyl, Naphthyl, 5-gliedriges oder 6-gliedriges Hetaryl oder 5-gliedriges oder 6-gliedriges Heterocyclyl, enthaltend ein bis drei N-Atome und/oder ein O- oder S-Atom oder ein oder zwei O- und/oder S-Atome, wobei die Ringsysteme unsubstituiert oder sub- stituiert sind durch einen bis drei Reste R^{a}:
R^{a} Cyano, Nitro, Amino, Aminocarbonyl, Aminothio-carbonyl, Halogen, C₁-C₆-Alkyl, C₁-C₆-Halogen-alkyl, C₁-C₆-Alkylcarbonyl, C₁-C₆-Alkylsulfonyl, C₁-C₆-Alkylsulfoxyl, C₃-C₆-Cycloalkyl, C₁ -C₆-Alkoxy, C₁-C₆-Halogenalkoxy, C₁-C₆-Alkyl-oxycarbonyl, C₁-C₆-Alkylthio, C₁-C₆-Alkylämino, Di-C₁-C₆-Alkylamino, C₁-C₆-Alkylaminocarbonyl, Di-C₁-C₆-Alkylaminocarbonyl, C₁-C₆-Alkylamino-thiocarbonyl, Di-C₁-C₆-Alkylaminothiocarbonyl, C₂-C₆-Alkenyl, C₂-C₆-Alkenyloxy, Phenyl, Phenoxy, Benzyl, Benzyloxy, 5- oder 6-gliedriges Hetero-cyclyl, 5- oder 6-gliedriges Hetaryl, 5- oder 6-gliedriges Hetaryloxy, C(=NOR^{α})-OR^{β} oder OC(R^{α})₂-C(R^{β}=NOR^{β},
wobei die cyclischen Reste ihrerseits unsubstituiert oder substituiert sind durch einen bis drei Reste R^{b}:
R^{b} Cyano, Nitro, Halogen, Amino, Aminocarbonyl, Aminothiocarbonyl, C₁-C₆-Alkyl, C₁-C₆-Halogenalkyl, C₁-C₆-Alkylsulfonyl, C₁-C₆-Alkyl-sulfoxyl, C₃-C₆-Cycloalkyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-A₁-kylaminothiocarbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkenyl, Phenyl, Phenoxy, Phenylthio, Benzyl, Benzyloxy, 5- oder 6-gliedriges Heterocyclyl, 5-oder 6-gliedriges Hetaryl, 5- oder 6-gliedriges Hetaryloxy oder C (=NOR^{α})-OR^{β};
R^{α},R^{β} Wasserstoff oder C₁-C₆-Alkyl;
R¹ Wasserstoff, Cyano, C₁-C₄-Alkyl, C₁-C₄-Halogenalkyl, C₃-C₆-Cycloalkyl, C₁-C₄-Alkoxy;
R² Phenyl, Phenylcarbonyl, Phenylsulfonyl, 5- oder 6-gliedriges Hetaryl, 5- oder 6-gliedriges Hetaryl-carbonyl oder 5- oder 6-gliedriges Hetarylsulfonyl, wobei die Ringsysteme unsubstituiert oder substituiert sind durch ein bis drei Reste R^{a};
C₁-C₁₀-Alkyl, C₃-C₆-Cycloalkyl, C₂-C₁₀-Alkenyl, C₂-C₁₀-Alkinyl, C₁-C₁₀-Alkylcarbonyl, C₂-C₁₀-Alkenylcarbonyl, C₃-C₁₀-Alkinylcarbonyl, C₁-C₁₀-Alkylsulfonyl, oder C(=NOR^{α})-OR^{β}, wobei die Kohlenwasserstoffreste dieser Gruppen unsubstituiert oder substituiert sind durch einen bis drei Reste R^{c}:
R^{c} Cyano, Nitro, Amino, Aminocarbonyl, Aminothio-carbonyl, Halogen, C₁-C₆-Alkyl, C₁-C₆-Halogen-alkyl, C₁-C₆-Alkylsulfonyl, C₁-C₆-Alkylsulfoxyl, C₁-C₆-Alkoxy, C₁-C₆-Halogenalkoxy, C₁-C₆-Alkoxy-carbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylamino-thiocarbonyl, Di-C₁-C₆-alkylaminothiocarbonyl, C₂-C₆-Alkenyl, C₂-C₆-Alkenyloxy,
C₃-C₆-Cycloalkyl, C₃-C₆-Cycloalkyloxy, 5- oder 6-gliedriges Heterocyclyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste R^{a} tragen können; und
R³ Wasserstoff,
C₁-C₆-Alkyl, C₂-C₆-Alkenyl, C₂-C₆-Alkinyl, wobei die Kohlenwasserstoffreste dieser Gruppen unsubstituiert oder substituiert sind durch einen bis drei Reste R^{C};
behandelt, die von den Pflanzen oder Saatgütern aufgenommen wird.

2. Verfahren nach Anspruch 1, wobei der Index m Null bedeutet und die Substituenten in Formel I folgende Bedeutung haben:
A -O-B, -CH₂O-B, -CH₂O-N=C(R¹)-B oder CH₂-O-N=C(R¹)-C(R²) =N-OR³;
B Phenyl, Pyridyl, Pyrimidinyl, Pyrazolyl, Triazolyl, wobei diese Ringsysteme substituiert sind durch einen oder zwei Reste R^{a};
R² C₁-C₆-Alkyl, C₂-C₁₀-Alkenyl, C₃-C₆-Cycloalkyl, wobei diese Gruppen unsubstituiert oder substituiert sind durch einen oder zwei Reste R^{b}';
R^{b}' C₁-C₆-Alkyl, C₃-C₆-Cycloalkyl, C₁-C₆-Alkoxy, C₁-C₆-Halogenalkoxy, Benzyl, Phenyl oder Phenoxy;
Phenyl, das unsubstituiert oder substituiert ist durch ein oder zwei Reste R^{a}; und
R³ C₁-C₆-Alkyl, C₂-C₁₀-Alkenyl oder C₂-C₁₀-Alkinyl.

3. Verfahren nach Ansprüchen 1 oder 2, wobei ein Wirkstoff der Formel II 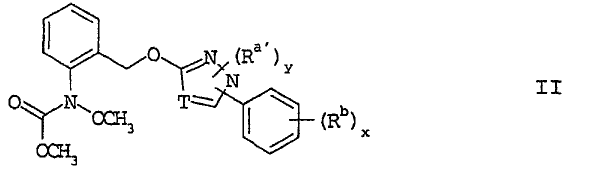 verwendet wird.

4. Verfahren nach Ansprüchen 1 oder 2, wobei ein Wirkstoff der Formel III 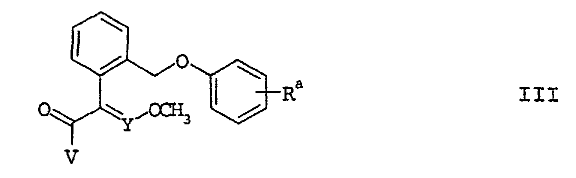 verwendet wird.

5. Verfahren nach Ansprüchen 1 oder 2, wobei ein Wirkstoff ausgewählt aus der Gruppe 1-5. III-4 und VII-1 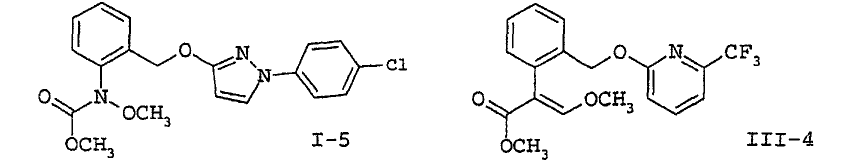 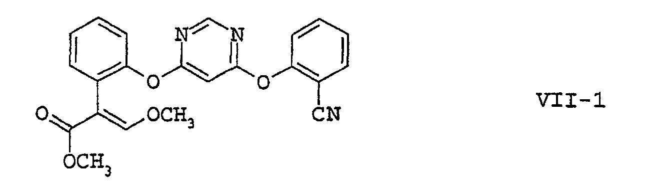 verwendet wird.

6. Verwendung der Verbindungen der Formel I gemäß Ansprüchen 1 bis 5 zur Induktion der Virenresistenz von Pflanzen.

## Claims

1. A method of inducing the virus resistance of plants which comprises treating the plants, the soil or seeds with an effective amount of a compound of the formula I 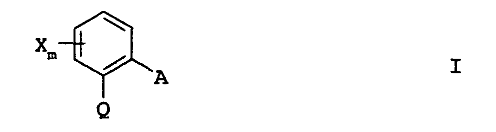 in which
X is halogen, C₁-C₄-alkyl or trifluoromethyl;
m is 0 or 1;
Q is C(=CH-CH₃)-COOCH₃, C(=CH-OCH₃)-COOCH₃, C(=N-OCH₃)-CONHCH₃, C(=N-OCH₃)-COOCH₃ or N(-OCH₃)-COOCH₃;
A is -O-B, -CH₂O-B, -OCH₂-B, -CH=CH-B, -C≡C―B, -CH₂O-N≡CR¹)-Bor-CH₂O-N=C(R¹)-C(R²)=N-OR³, where
B is phenyl, naphthyl, 5-membered or 6-membered hetaryl or 5-membered or 6-membered heterocyclyl, containing one to three N atoms and/or one O or S atom or one or two O and/or S atoms, the ring systems being unsubstituted or substituted by one to three radicals R^{a}:
R^{a} is cyano, nitro, amino, aminocarbonyl, aminothiocarbonyl, halogen, C₁-C₆-alkyl, C₁-C₆-haloalkyI, C₁-C₆-alkylcarbonyl, C₁-C₆-alkylsulfonyl, C₁-C₆-alkylsulfinyl, C₃-C₆-cycloalkyl, C₁-C₆-alkoxy, C₁-C₆-haloalkoxy, C₁-C₆-alkyloxycarbonyl, C₁-C₆-alkylthio, C₁-C₆-alkylamino, di-C₁-C₆-alkylamino, C₁-C₆-alkylaminocarbonyl, di-C₁-C₆-alkylamino-carbonyl, C₁-C₆-alkylaminothiocarbonyl, di-C₁-C₆-alkylaminothiocarbonyl, C₂-C₆-alkenyl, C₂-C₆-alkenyloxy, phenyl, phenoxy, benzyl, benzyloxy, 5- or 6-membered heterocyclyl, 5- or 6-membered hetaryl, 5- or 6-membered hetaryloxy, C(=NOR^{α})-OR^{β} or OC (R^{α}) 2-C(R^{β}=NOR^{β}, the cyclic radicals, in turn, being unsubstituted or substituted by one to three radicals R^{b}:
R^{b} is cyano, nitro, halogen, amino, amino-carbonyl, aminothiocarbonyl, C₁-C₆-alkyl, C₁-C₆-haloalkyl, C₁-C₆-alkylsulfonyl, C₁-C₆-alkylsulfinyl, C₃-C₆-cycloalkyl, C₁-C₆alkoxy, C₁-C₆-haloalkoxy, C₁-C₆-alkoxy-carbonyl, C₁-C₆-alkylthio, C₁-C₆-alkylamino, di-C₁-C₆-alkylamino, C₁-C₆-alkylamino-carbonyl, di-C₁-C₆-alkylaminocarbonyl, C₁-C₆-alkylaminothiocarbonyl, di-C₁-C₆-alkyl-aminothiocarbonyl, C₂-C₆-alkenyl, C₂-C₆ -alkenyloxy, C₃-C₆-cycloalkyl, C₃-C₆-cycloalkenyl, phenyl, phenoxy, phenylthio, benzyl, benzyloxy, 5- or 6-membered heterocyclyl, 5- or 6-membered hetaryl, 5- or 6-membered hetaryloxy or C (=NOR^{α}) -OR^{β};
R^{α},R^{β} are hydrogen or C₁-C₆-alkyl ;
R¹ is hydrogen, cyano, C₁-C₄-alkyl, C₁-C₄-haloalkyl, C₃-C₆-cycloalkyl, C₁-C₄-alkoxy;
R² is phenyl, phenylcarbonyl, phenylsulfonyl, 5- or 6-membered hetaryl, 5- or 6-membered hetarylcarbonyl or 5- or 6-membered hetarylsulfonyl, the ring systems being unsubstituted or substituted by one to three radicals R^{a},
C₁-C₁₀-alkyl, C₃-C₆-cycloalkyl, C₂-C₁₀-alkenyl1 C₂-C₁₀-alkynyl, C₁-C₁₀-alkylcarbonyl, C₂-C₁₀-alkenyl-carbonyl, C₃-C₁₀-alkynylcarbonyl, C₁-C₁₀-alkyl-sulfonyl, or C(=NOR^{α})-OR^{β}, the hydrocarbon radicals of these groups being unsubstituted or substituted by one to three radicals R^{c}:
R^{c} is cyano, nitro, amino, aminocarbonyl, aminothiocarbonyl, halogen, C₁-C₆-alkyl, C₁-C₆-haloalkyI, C₁-C₆-alkylsulfonyl, C₁-C₆-alkylsulfinyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylamino-thiocarbonyl, di-C₁-C₆-alkylaminothiocarbonyl, C₂-C₆-alkenyl, C₂-C₆-alkenyloxy,
C₃-C₆-cycloalkyl, C₃-C₆-cycloalkyloxy, 5- or 6-membered heterocyclyl, 5- or 6-membered heterocyclyloxy, benzyl, benzyloxy, phenyl, phenoxy, phenylthio, 5- or 6-membered hetaryl, 5- or 6-membered hetaryloxy and hetarylthio, it being possible for the cyclic groups, in turn, to be partially or fully halogenated or to have attached to them one to three radicals R^{a}; and
R³ is hydrogen, C₁-C₆-alkyl, C₂-C₆-alkenyl, C₂-C₆-alkynyl, the hydrocarbon radicals of these groups being unsubstituted or substituted by one to three radicals R^{c};
which compound is taken up by the plants or seeds.

2. A method as claimed in claim 1, wherein the index m is zero and the substituents of formula I have the following meanings:
A is -O-B, -CH₂O-B, -CH₂O-N=C(R¹)-B or CH₂-O-N=C(R¹) -C(R²)=N-OR³;
B is phenyl, pyridyl, pyrimidinyl, pyrazolyl, triazolyl, these ring systems being substituted by one or two radicals R^{a};
R² is C₁-C₆-alkyl, C₂-C₁₀-alkenyl, C₃-C₆-cycloalkyl, these groups being unsubstituted or substituted by one or two radicals R^{b}';
R^{b}' is C₁-C₆-alkyl, C₃-C₆-cycloalkyl, C₁-C₆-alkoxy, C₁-C₆-haloalkoxy, benzyl, phenyl or phenoxy; phenyl which is unsubstituted or substituted by one or two radicals R^{a}; and
R³ is C₁-C₆-alkyl, C₂-C₁₀-alkenyl or C₂-C₁₀-alkynyl.

3. A method as claimed in claim 1 or 2, wherein an active ingredient of the formula II 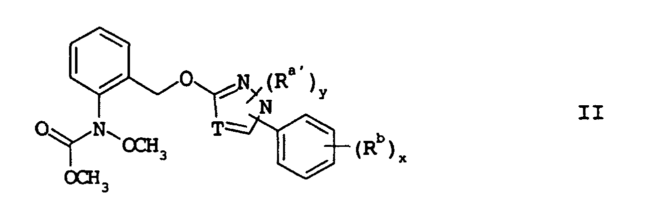 is used.

4. A method as claimed in claim 1 or 2, wherein an active ingredient of the formula III 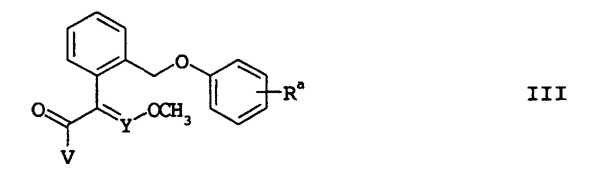 is used.

5. A method as claimed in claim 1 or 2, wherein an active ingredient selected from the group of 1-5, III-4 and VII-1 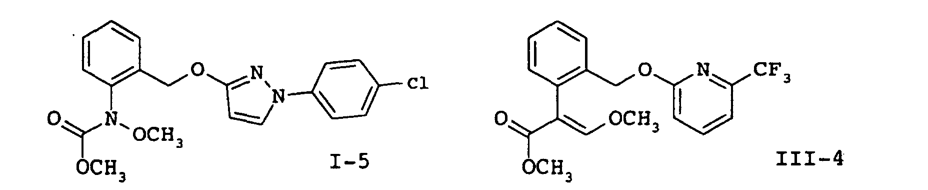 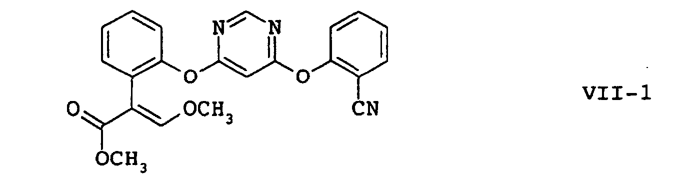 is used.

6. The use of the compounds of the formula I as claimed in any of claims 1 to 5 for inducing the virus resistance of plants.

## Revendications

1. Procédé pour conférer à des plantes une résistance aux virus, **caractérisé en ce que** l'on traite les plantes, le sol ou les semences avec une quantité efficace d'un composé répondant à la formule 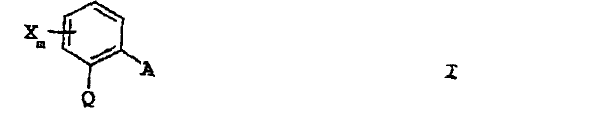 dans laquelle
X = un atome d'halogène, un groupe alkyle en C₁-C₄ ou un groupe trifluorométhyle ;
m= 0 ou 1 ;
Q = C(=CH-CH₃)-COOCH₃, C(=CH-OCH₃)-COOCH₃, C(=N-OCH₃)-CONHCH₃, C(=N-OCH₃)-COOCH₃ ou N(-OCH3)-COOCH3
A = -O-B, -CH₂O-B, -OCH₂-B, -CH=CH-B, -C≡C-B, -CH₂O-N=C(R¹)-B ou -CH₂O-N=C(R¹)-C(R²)=N-OR³, dans lesquels
B = un groupe phényle, un groupe naphtyle, un groupe hétéroaryle à 5 ou 6 membres ou un groupe hétérocyclyle à 5 ou 6 membres, contenant un à trois atomes d'azote et/ou un atome d'oxygène ou de soufre, ou un ou deux atomes d'oxygène et/ou de soufre, les systèmes cycliques étant non substitués ou substitués par un à trois résidus R^{a:}
R^{a} = un groupe cyano, un groupe nitro, un groupe amino, un groupe aminocarbonyle, un groupe aminothiocarbonyle, un atome d'halogène, un groupe alkyle en C₁-C₆, un groupe halogénalkyle en C₁-C₆, un groupe (alkyle en C₁-C₆ )carbonyle, un groupe (alkyle en C₁-C₆)sulfonyle, un groupe (alkyle en C₁-C₆)sulfoxyle, un groupe cycloalkle en C₃-C₆, un groupe alcoxy en C₁-C₆, un groupe halogénalcoxy en C₁-C₆, un groupe (alkyle en C₁-C₆) oxycarbonyleun groupe (alkyle en C₁-C₆) thio, un groupe (alkyle en C₁-C₆)amino, un groupe di(alkyle en C₁-C₆)amino, un groupe (alkyle en C₁-C₆)aminocarbonyle, un groupe di(alkyle en C₁-C₆)aminocarbonyte, un groupe (alkyle en C₁-C₆)aminothiocarbonyle, un groupe di(alkyle en C₁-C6)aminothiocarbonyle, un groupe alcényle en C₂-C₆, un groupe alcényloxy en C₂-C₆, un groupe phényle, un groupe phénoxy, un groupe benzyle, un groupe benzyloxy, un groupe hétérocyclyle à 5 ou 6 membres, un groupe hétéroaryle à 5 ou 6 membres, un groupe hétéroaryloxy à 5 ou 6 membres, un groupe C(=NOR^{α})-OR^{β} ou un groupe OC(R^{α})₂-C(R^{β})=NOR^{β},
les résidus cycliques étant eux-mêmes non substitués ou substitués par un à trois résidus R^{b} :
R^{b} = un groupe cyano, un groupe nitro, un atome d'halogène, un groupe amino, un groupe aminocarbonyle, un groupe aminothiocarbonyle, un groupe alkyle en C₁-C₆, un groupe halogénalkyle en C₁-C₆, un groupe (alkyle en C₁-C₆)sulfonyle, un groupe (alkyle en C₁-C₆)sulfoxyle, un groupe cycloalkle en C₃-C₆, un groupe alcoxy en C₁-C₆, un groupe halogénalcoxy en C₁-C₆, un groupe (alcoxy en C₁-C₆)carbonyle, un groupe (alkyle en C₁-C₆)thio, un groupe (alkyle en C₁-C₆)amino, un groupe di(alkyle en C₁-C₆)amino, un groupe (alkyle en C₁-C₆)aminocarbonyle, un groupe di(alkyle en C₁-C₆)aminocarbonyle, un groupe (alkyle en C₁-C₆)aminothiocarbonyle, un groupe di(alkyle en C₁-C₆)aminothiocarbonyle, un groupe alcényle en C₂-C₆, un groupe alcényloxy en C₂-C₆, un groupe cycloalkyte en C₃-C₆, un groupe cycloalcényle en C₃-C₆, un groupe phényle, un groupe phénoxy, un groupe phénylthio, un groupe benzyle, un groupe benzyloxy, un groupe hétérocyclyle à 5 ou 6 membres, un groupe hétéroaryle à 5 ou 6 membres, un groupe hétéroaryloxy à 5 ou 6 membres ou un groupe C(=NOR^{α})-OR^{β}
R^{α}, R^{β} = un atome d'hydrogène ou un groupe alkyle en C₁-C₆
R¹ = un atome d'hydrogène, un groupe cyano, un groupe alkyle en C₁-C₄, un groupe halogénalkyle en C₁-C₄, un groupe cycloalkyle en C₃-C₆, un groupe alcoxy en C₁-C₄
R² = un groupe phényle, un groupe phénylcarbonyle, un groupe phénylsulfonyle, un groupe hétéroaryle à 5 ou 6 membres, un groupe hétéroarylcarbonyle à 5 ou 6 membres, ou un groupe hétéroarylsulfonyle à 5 ou 6 membres, les systèmes cycliques étant non substitués ou substitués par un à trois résidus R^{a} ; un groupe alkyle en C₁-C₁₀, un groupe cycloalkyle en C₃-C₆, un groupe alcényle en C₂-C₁₀, un groupe alcinyle en C₂-C₁₀,
un groupe (alkyle en C₁-C₁₀)carbonyle, un groupe (alcényle en C₂-C₁₀)carbonyle
un groupe (alcinyle en C₃-C₁₀)carbonyle, un groupe (alkyle en C₁-C₁₀)sulfonyle, ou un groupe C(=NOR^{α})-OR^{β},
les résidus hydrocarbonés de ces groupes étant non substitués ou substitués par un à trois résidus R^{c:}
R^{c} = un groupe cyano, un groupe nitro, un groupe amino, un groupe aminocarbonyle, un groupe aminothiocarbonyle, un atome d'halogène, un groupe alkyle en C₁-C₁₀, un groupe halogénalkyle en C₁-C₆, un groupe (alkyle en C₁-C₆)sulfonyle, un groupe (alkyle en C₁-C₆)sulfoxyle, un groupe alcoxy en C₁-C₆, un groupe halogénalcoxy en C₁-C₆, un groupe (alcoxy en C₁-C₆)carbonyle, un groupe (alkyle en C₁-C₆)thio, un groupe (alkyle en C₁-C₆)amino, un groupe di(alkyle en C₁-C₆)amino, un groupe (alkyle en C₁-C₆)aminocarbonyle, un groupe di(alkyle en C₁-C₆)aminocarbonyle, un groupe (alkyle en C₁-C₆)aminothiocarbonyle, un groupe di(alkyle en C₁-C₆)aminothiocarbonyle, un groupe alcényle en C₂-C₆, un groupe alcényloxy en C₂-C₆ un groupe cycloalkyle en C₃-C₆, un groupe cycloalkyloxy en C₃-C₆, un groupe hétérocyclyle à 5 ou 6 membres, un groupe hétérocyclyloxy à 5 ou 6 membres, un groupe benzyle, un groupe benzyloxy, un groupe phényle, phénoxy, phénylthio, hétéroaryle à 5 ou 6 membres, hétéroaryloxy à 5 ou 6 membres et un groupe hétéroarylthio, les groupes cycliques pouvant eux-mêmes être partiellement ou entièrement halogénés ou pouvant porter un à trois résidus R^{a} ; et
R³ = un atome d'hydrogène,
un groupe alkyle en C₁-C₆, un groupe alcényle en C₂-C₆, un groupe alcinyle en C₂-C₆, les résidus hydrocarbonés de ces groupes étant non substitués ou substitués par un à trois résidus R^{c} ;
qui est absorbé par les plantes ou les semences.

2. Procédé selon la revendication 1, dans lequel l'indice m signifie zéro et les substituants dans la formule l ont les significations suivantes :
A = un groupe -O-B, un groupe -CH₂O-B, un groupe -CH₂O-N=C(R¹)-B ou
un groupe CH₂-O-N=C(R¹)₋C(R²)=N-OR³ ;
B = un groupe phényle, un groupe pyridyle, un groupe pyrimidinyle, un groupe pyrazolyle, un groupe triazolyle, ces systèmes cycliques étant substitués par un ou deux résidus R^{a} ;
R² = alkyle en C₁-C₆, alcényle en C₂-C₁₀, cycloalkyle en C₃-C₆, ces groupes étant non substitués ou substitués par un ou deux résidus R^{b}' ;
R^{b}'= un groupe alkyle en C₁-C₆, un groupe cycloalkyle en C₃-C₆, un groupe alcoxy en C₁-C₆, un groupe halogénalcoxy en C₁-C₆, un groupe benzyle, un groupe phényle ou un groupe phénoxy ;
un groupe phényle, qui est non substitué ou substitué par un ou deux résidus R^{a} ; et
R³ = un groupe alkyle en C₁-C₆, un groupe alcényle en C₂-C₁₀ ou un groupe alcinyle en C₂-C₁₀.

3. Procédé selon les revendications 1 ou 2, dans lequel on utilise une substance active répondant à la formule ll

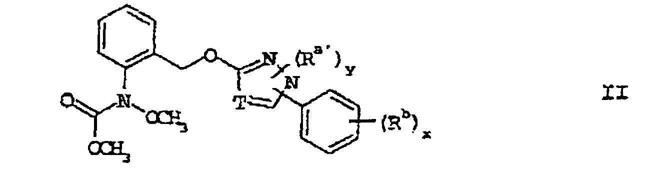

4. Procédé selon les revendications 1 ou 2 dans lequel on utilise une substance active répondant à la formule lll

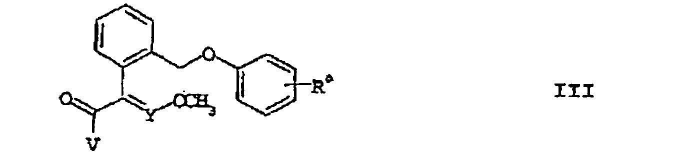

5. Procédé selon les revendications 1 ou 2 , dans lequel on utilise une substance active choisie dans le groupe l-5, lll-4 et Vll-1.

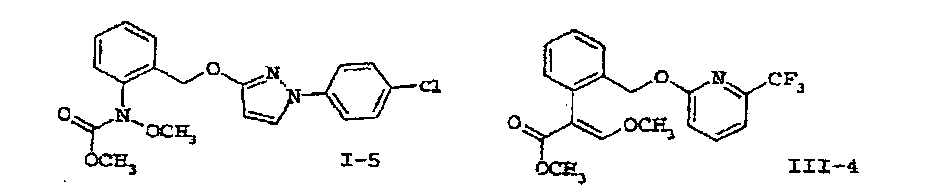

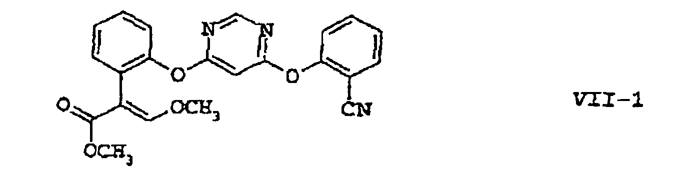

6. Utilisation des composés répondant à la formule l selon les revendications 1 à 5 pour conférer aux plantes une résistance aux virus.
